(19) **Europäisches Patentamt**

**European Patent Office**

**Office européen des brevets**

(11) **EP 1 180 210 B2**

(12) **NEUE EUROPÄISCHE PATENTSCHRIFT**

(45) Veröffentlichungstag und Bekanntmachung des Hinweises auf die Entscheidung über den Einspruch:
**22.11.2006 Patentblatt 2006/47**

(45) Hinweis auf die Patenterteilung:
**30.06.2004 Patentblatt 2004/27**

(21) Anmeldenummer: **00941887.2**

(22) Anmeldetag: **27.04.2000**

(51) Int Cl.:
*F02D 41/14* (2006.01)   *F02D 41/22* (2006.01)

(86) Internationale Anmeldenummer:
**PCT/DE2000/001322**

(87) Internationale Veröffentlichungsnummer:
**WO 2000/068557 (16.11.2000 Gazette 2000/46)**

(54) **VERFAHREN UND VORRICHTUNG ZUR STEUERUNG EINER BRENNKRAFTMASCHINE MIT EINEM ABGASNACHBEHANDLUNGSSYSTEM**

METHOD AND DEVICE FOR CONTROLLING AN INTERNAL COMBUSTION ENGINE WITH AN EXHAUST TREATMENT SYSTEM

PROCEDE ET DISPOSITIF POUR COMMANDER UN MOTEUR A COMBUSTION INTERNE EQUIPE D'UN SYSTEME DE RETRAITEMENT DES GAZ D'ECHAPPEMENT

(84) Benannte Vertragsstaaten:
**DE FR GB IT**

(30) Priorität: **07.05.1999 DE 19921299**
          **22.03.2000 DE 10014224**

(43) Veröffentlichungstag der Anmeldung:
**20.02.2002 Patentblatt 2002/08**

(73) Patentinhaber: **ROBERT BOSCH GMBH**
**70442 Stuttgart (DE)**

(72) Erfinder:
- **LEUZ, Markus**
  **D-74214 Schoental-Oberkessach (DE)**
- **PFAEFFLE, Andreas**
  **D-71543 Wuestenrot (DE)**
- **SCHERNEWSKI, Ralf**
  **D-70469 Stuttgart (DE)**

(56) Entgegenhaltungen:

| | |
|---|---|
| EP-B- 0 260 031 | DE-A- 4 230 180 |
| DE-A- 19 744 067 | DE-A- 19 838 032 |
| DE-C- 19 714 293 | US-A- 5 647 669 |

- PATENT ABSTRACTS OF JAPAN vol. 1995, no. 05, 30. Juni 1995 (1995-06-30) & JP 07 034924 A (TOYOTA MOTOR CORP), 3. Februar 1995 (1995-02-03)
- PATENT ABSTRACTS OF JAPAN vol. 1996, no. 06, 28. Juni 1996 (1996-06-28) & JP 08 035418 A (NIPPONDENSO CO LTD), 6. Februar 1996 (1996-02-06)
- PATENT ABSTRACTS OF JAPAN vol. 1999, no. 09, 30. Juli 1999 (1999-07-30) & JP 11 117786 A (MITSUBISHI MOTORS CORP), 27. April 1999 (1999-04-27)

**EP 1 180 210 B2**

## Beschreibung

Stand der Technik

Die Erfindung geht aus von einem Verfahren und eine Vorrichtung zur Steuerung einer Brennkraftmaschine mit einem Abgasnachbehandlungssystem nach der Gattung der unabhängigen Ansprüche.

Aus der nicht vorveröffentlichten DE 199 06 287 A 1 sind ein Verfahren und eine vorrichtung zur Steuerung einer Brennkraftmaschine mit einem Abgasnachbehandlungssystem bekannt geworden, welches ein Partikelfilter enthält, das die im Abgas enthaltenen Partikel zurückhält. Zum ordnungsgemäßen Betreiben des Partikelfilters muss sein Beladungszustand mit Partikeln bekannt sein. Der Beladungszustand des Partikelfilters wird indirekt über den Druckabfall am Partikelfilter gemessen. Verwendet werden können entweder jeweils ein Drucksensor vor und nach dem Partikelfilter oder ein Differenzdrucksensor.

Aus der EP 470 361 A 1 sind ein in einem Abgassystem einer Brennkraftmaschine angeordnetes Partikelfilter und einen zur Regeneration des Partikelfilters vorgesehener Brenner bekannt geworden. Die Partikelernission der Brennkraftmaschine kann beispielsweise abgeschätzt werden anhand der in einem Partikelemission-Kennfeld hinterlegten Drehzahl oder der Last der Brennkraftmaschine. Der Beladungszustand des Partikelfilters wird schließlich anhand des Kennfelds und lastabhängiger Betriebszeiten ermittelt.

In der DE 42 30 180 A sind ein Verfahren und eine Vorrichtung zur Ermittlung des Beladungszustands von Partikelfiltern beschrieben, welche bei der Ermittlung des Beladungszustands des Partikelfilters von einer Messung einer thermodynamischen Größe des den Partikelfilter durchströmenden Abgasvolumens ausgehen, wobei das Messergebnis mit wenigstens einer Betriebskenngröße einer Brennkraftmaschine und in Abhängigkeit von der Volumenstromtemperatur im Partikelfilter korrigiert wird.

Der Erfindung liegt die Aufgabe zugrunde, ein Verfahren und eine Vorrichtung zur Steuerung einer Brennkraftmaschine mit einem Abgasnachbehandlungssystem anzugeben, mit denen der Beladungszustand eines im Abgasnachbehandlungssystem angeordneten Partikelfilters ermittelt werden kann. Insbesondere soll der Beladungszustand auch bei Ausfall verschiedener Sensoren bzw. ohne Verwendung spezieller Sensoren bestimmt werden.

Die Aufgabe wird durch die in den unabhängigen Ansprüchen angegebenen Merkmale jeweils gelöst.

Vorteile der Erfindung

Mit der erfindungsgemäßen Vorgehensweise ist eine einfache Simulation des Beladungszustands eines in einem Abgasnachbehandlungssystem angeordneten Partikelfilters möglich. Verwendet wird eine Größe, welche die Sauerstoffkonzentration im Abgas charakterisiert, die zur Simulation einer den Beladungszustand des Partikelfilters charakterisierenden Größe herangezogen wird. Durch die erfindungsgemäße Vorgehensweise werden prinzipiell keine Sensoren zur Ermittlung des Beladungszustands des Partikelfilters benötigt. Sofern solche Sensoren vorgesehen sind, können diese überwacht und bei Ausfall eines Sensors ein Notbetrieb durchgeführt werden. Besonders vorteilhaft ist es, dass lediglich Größen zur Simulation verwendet werden, die bereits zur Steuerung der Brennkraftmaschine verwendet werden. Die erfindungsgemäß vorgesehenen Maßnahmen weisen weiterhin den Vorteil auf, dass insbesondere in dynamischen Zuständen der Brennkraftmaschine, beispielsweise bei Beschleunigungsvorgängen, zuverlässige Simulationswerte erhalten werden.

Vorteilhafte Weiterbildungen und Ausgestaltungen des erfindungsgemäßen Verfahrens und der erfindungsgemäßen Vorrichtung ergeben sich aus abhängigen Ansprüchen und aus der folgenden Beschreibung.

Zeichnung

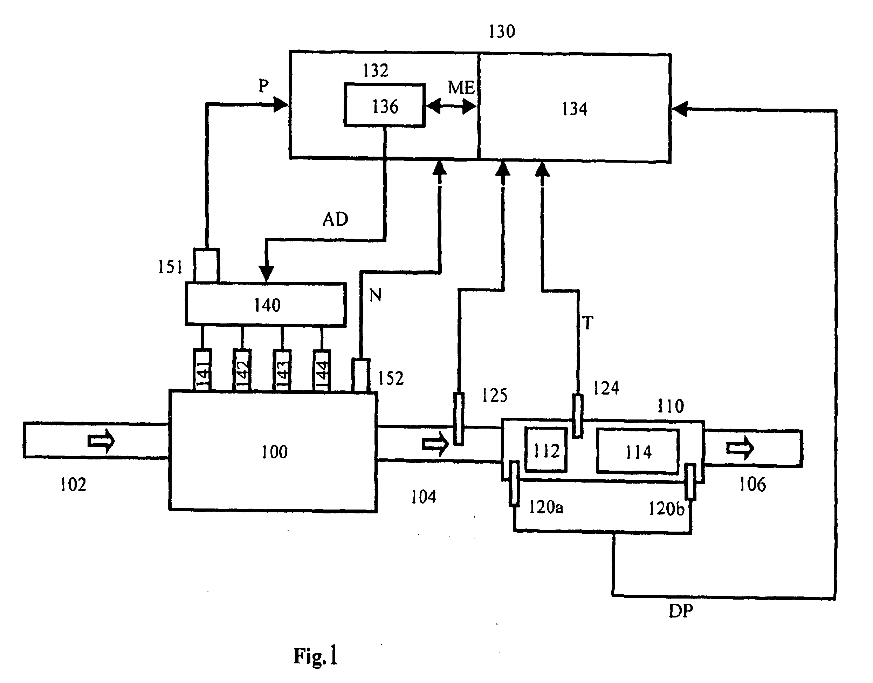

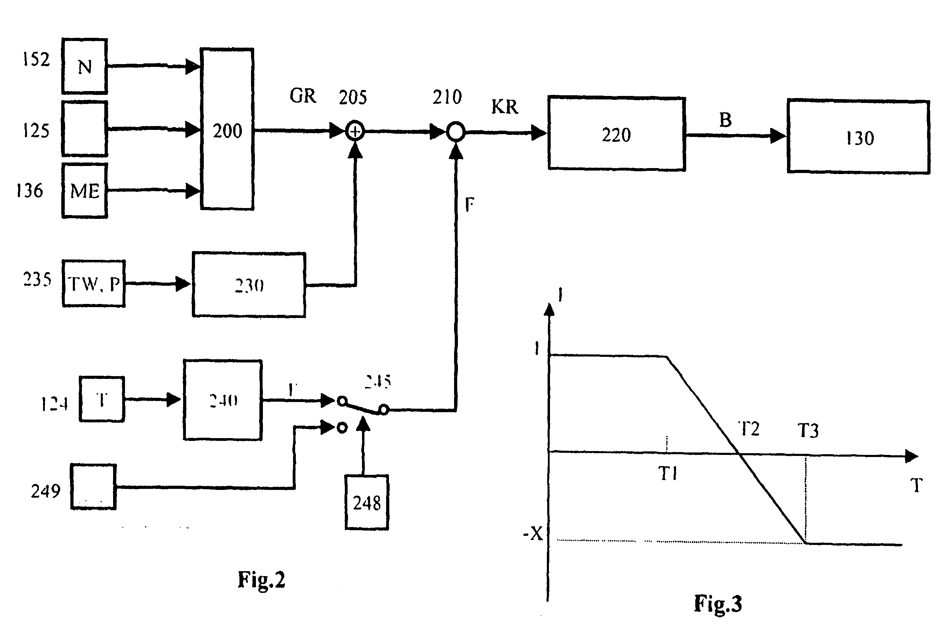

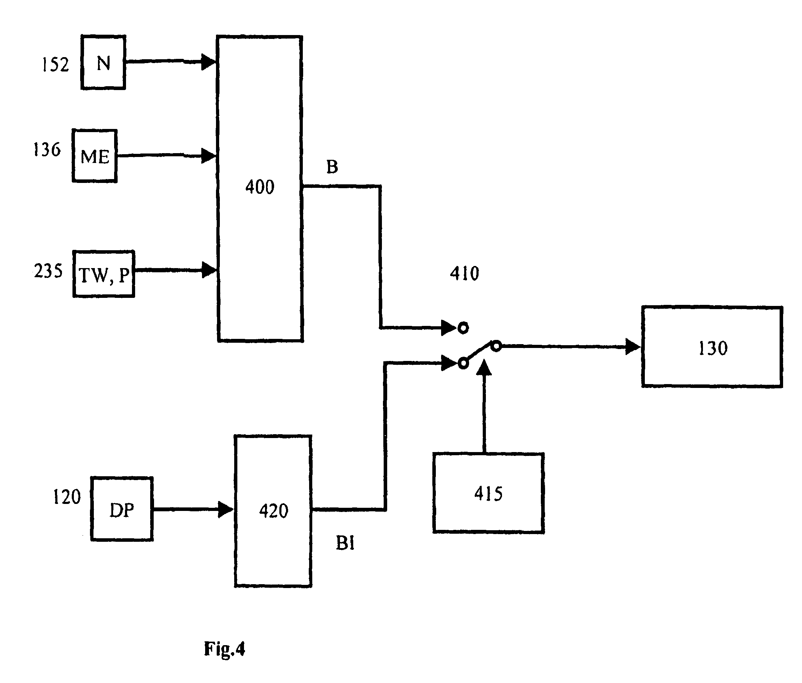

Figur 1 zeigt ein Blockdiagramm einer erfindungsgemäßen Vorrichtung, Figur 2 eine detaillierte Darstellung einer Simulation, Figur 3 eine Kennlinie und Figur 4 eine weitere Ausgestaltung einer erfindungsgemäßen Vorrichtung.

Die Erfindung wird nachstehend anhand der in der Zeichnung dargestellten Ausführungsformen erläutert. Es zeigen Figur 1 ein Blockdiagramm der erfindungsgemäßen Vorrichtung, Figur 2 eine detaillierte Darstellung der Simulation, Figur 3 eine Kennlinie und Figur 4 eine weitere Ausgestaltung der erfindungsgemäßen Vorrichtung.

Beschreibung von Ausführungsbeispielen

Im folgenden wird die erfindungsgemäße Vorrichtung am Beispiel einer selbstzündenden Brennkraftmaschine dargestellt, bei der die Kraftstoffzumessung mittels eines sogenannten Common-Rail-Systems gesteuert wird. Die erfindungsgemäße Vorgehensweise ist aber nicht auf diese Systeme beschränkt. Sie kann auch bei anderen Brennkraftmaschinen eingesetzt werden.

Mit 100 ist eine Brennkraftmaschine bezeichnet, die über eine Ansaugleitung 102 Frischluft zugeführt bekommt und über eine Abgasleitung 104 Abgase abgibt. In der Abgasleitung 104 ist ein Abgasnachbehandlungsmittel 110 angeordnet, von dem die gereinigten Abgase über die Leitung 106 in die Umgebung gelangen. Das Abgasnachbehandlungsmittel 110 umfaßt im wesentlichen einen sogenannten Vorkatalysator 112 und stromabwärts einen Filter 114. Vorzugsweise zwischen dem Vorkatalysator 112 und dem Filter 114 ist ein Temperatursensor 124 angeordnet, derein Temperatursignal T bereitstellt. Vor dem Vorkatalysator 112 und nach dem Filter 114 sind jeweils Sensoren 120a und 120b vorgesehen. Diese Sensoren wirken als Differenzdrucksensor 120 und stellen ein Differenzdrucksignal DP bereit, daß den Differenzdruck zwischen Eingang und Ausgang des Abgasnachbehandlungsmittel charakterisiert.

Bei einer besonders vorteilhaften Ausgestaltung ist ein Sensor 125 vorgesehen, der ein Signal liefert, das die Sauerstoffkonzentration im Abgas charakterisiert. Alternativ oder ergänzend kann vorgesehen sein, daß diese Größe ausgehend von anderen Messwerten berechnet oder mittels einer Simulation bestimmt wird.

Der Brennkraftmaschine 100 wird über eine Kraftstoffzumeßeinheit 140 Kraftstoff zugemessen. Diese mißt über Injektoren 141, 142, 143 und 144 den einzelnen Zylindern der Brennkraftmaschine 100 Kraftstoff zu. Vorzugsweise handelt es sich bei der Kraftstoffzumeßeinheit um ein sogenanntes Common-Rail-System. Eine Hochdruckpumpe Kraftstoff fördert Kraftstoff in einen Druckspeicher. Vom Speicher gelangt der Kraftstoff über die Injektoren in die Brennkraftmaschine.

An der Kraftstoffzumeßeinheit 140 sind verschiedene Sensoren 151 angeordnet, die Signale bereitstellen, die den Zustand der Kraftstoffzumeßeinheit charakterisieren. Hierbei handelt es sich bei einem Common-Rail-System beispielsweise um den Druck P im Druckspeicher. An der Brennkraftmaschine 100 sind Sensoren 152 angeordnet, die den Zustand der Brennkraftmaschine charakterisieren. Hierbei handelt es sich vorzugsweise um einen Drehzahlsensor, der ein Drehzahlsignal N bereitstellt und um weitere Sensoren, die nicht dargestellt sind.

Die Ausgangssignale dieser Sensoren gelangen zu einer Steuerung 130, die als einer erste Teilsteuerung 132 und einer zweiten Teilsteuerung 134 dargestellt ist. Vorzugsweise bilden die beiden Teilsteuerungen eine bauliche Einheit. Die erste Teilsteuerung 132 steuert vorzugsweise die Kraftstoffzumeßeinheit 140 mit Ansteuersignalen AD, die die Kraftstoffzumessung beeinflussen, an. Hierzu beinhaltet die erste Teilsteuerung 132 eine Kraftstoffmengensteuerung 136. Diese liefert ein Signal ME, daß die einzuspritzende Menge charakterisiert, an die zweite Teilsteuerung 134.

Die zweite Teilsteuerung 134 steuert vorzugsweise das Abgasnachbehandlungssystem und erfaßt hierzu die entsprechenden Sensorsignale. Desweiteren tauscht die zweite Teilsteuerung 134 Signale, insbesondere über die eingespritzte Kraftstoffmenge ME, mit der ersten Teilsteuerung 132 aus. Vorzugsweise nutzen die beiden Steuerungen gegenseitig die Sensorsignale und die internen Signale.

Die erste Teilsteuerung, die auch als Motorsteuerung 132 bezeichnet wird, steuert abhängig von verschiedenen Signalen, die den Betriebszustand der Brennkraftmaschine 100, den Zustand der Kraftstoffzumeßeinheit 140 und die Umgebungsbedingung charakterisieren sowie einem Signal, das die von der Brennkraftmaschine gewünschte Leistung und/oder Drehmoment charakterisiert, das Ansteuersignal AD zur Ansteuerung der Kraftstoffzumeßeinheit 140. Solche Einrichtungen sind bekannt und vielfältig eingesetzt.

Insbesondere bei Dieselbrennkraftmaschinen können Partikelemissionen im Abgas auftreten. Hierzu ist es vorgesehen, daß die Abgasnachbehandlungsmittel 110 diese aus dem Abgas herausfiltern. Durch diesen Filtervorgang sammeln sich in dem Filter 114 Partikel an. Diese Partikel werden dann in bestimmten Betriebszuständen und/oder nach Ablauf bestimmter Zeiten verbrannt, um den Filter zu reinigen. Hierzu ist üblicherweise vorgesehen, daß zur Regeneration des Filters 114 die Temperatur im Abgasnachbehandlungsmittel 110 soweit erhöht wird, daß die Partikel verbrennen.

Zur Temperaturerhöhung ist der Vorkatalysator 112 vorgesehen. Die Temperaturerhöhung erfolgt beispielsweise dadurch, daß der Anteil an unverbrannten Kohlenwasserstoffen im Abgas erhöht wird. Diese unverbrannten Kohlenwasserstoffe reagieren dann in dem Vorkatalysator 112 und erhöhen dadurch dessen Temperatur und damit auch die Temperatur des Abgases, das in den Filter 114 gelangt.

Diese Temperaturerhöhung des Vorkatalysators und der Abgastemperatur erfordert einen erhöhten Kraftstoffverbrauch und soll daher nur dann durchgeführt werden, wenn dies erforderlich ist, d.h. der Filter 114 mit einem gewissen Anteil von Partikeln beladen ist. Eine Möglichkeit den Beladungszustand zu erkennen besteht darin, den Differenzdruck DP zwischen Eingang und Ausgang des Abgasnachbehandlungsmittel zu erfassen und ausgehend von diesem den Beladungszustand zu ermitteln. Dies erfordert einen Differenzdrucksensor 120.

Erfindungsgemäß ist vorgesehen, daß ausgehend von verschiedenen Größen, insbesondere der Drehzahl N und der eingespritzten Kraftstoffmenge ME die erwartete Partikelemissionen bestimmt und dadurch der Beladungszustand simuliert wird. Wird ein entsprechender Beladungszustand erreicht, wird durch Ansteuerung der Kraftstoffzumeßeinheit 140 die Regeneration des Filters 114 durchgeführt. Anstelle der Drehzahl N und der eingespritzten Kraftstoffmenge ME können auch andere Signale, die diese Größe charakterisieren verwendet werden. So kann beispielsweise das Ansteuersignal, insbesondere die Ansteuerdauer, für die Injektoren und/oder eine Momentengröße als Kraftstoffmenge ME verwendet werden.

Bei einer Ausgestaltung wird neben der eingespritzten Kraftstoffmenge ME und der Drehzahl N auch die Temperatur T im Abgasnachbehandlungssystem zur Berechnung des Beladungszustandes verwendet. Hierzu wird vorzugsweise der Sensor 124 eingesetzt. Die so berechnete Größe für den Beladungszustand wird dann zur Steuerung des Abgasnachbehandlungssystems verwendet, d.h. abhängig von dem Beladungszustand wird dann die Regeneration über die Temperaturerhöhung eingeleitet.

Besonders vorteilhaft ist es, wenn neben der Berechnung auch eine Messung des Beladungszustands über den Differnzdrucksensor 120 erfolgt. In diesem Fall ist eine Fehlerüberwachung des Systems möglich. Dies heißt die simulierte Größe B und die gemessen Größe BI des Beladungszustandes werden zur Ertelbar zur Steuerung des Abgasnachbehandlungssystems verwendet. Durch die Verwendung einer simulierten Größe können verschiedene Sensoren, insbesondere der Differenzdrucksensor 120 eingespart werden.

Der Beladungszustand wird ausgehend von wenigstens der Drehzahl und/oder der einzuspritzenden Kraftstoffmenge, bzw. entsprechender Signale, aus einem Kennfeld ausgelesen. Dieser so ermittelte Grundwert wird anschließend korrigiert. Insbesondere ist ein Korrektur abhängig von der Temperatur des Abgasnachbehandlungsmittels, insbesondere des Partikelfilters, vorgesehen. Diese Korrektur berücksichtigt die temperaturabhängige ständige Regeneration des Filters Eine weitere besonders vorteilhafte Ausgestaltung ist in Figur 4 dargestellt. Die in Figur 2 dargestellte Simulation zur Berechnung des Beladungszustandes B ist mit 400 bezeichnet. Diese Simulation 400 liefert ein Signal B bezüglich des Beladungszustandes des Filters 114. Desweiteren ist eine Berechnung 420 vorgesehen, der das Ausgangssignal DP des Differenzdrucksensors 120 zugeleitet wird. Sowohl die Simulation 400 als auch die Berechnung 420 liefern Signale an ein Schaltmittel 410, daß wahlweise eines der Signale auswählt und der Steuerung 130 bereitstellt. Das Schaltmittel 410 wird von einer Fehlererkennung 415 angesteuert.

Ausgehend von dem Differenzdruck DP, der mittels des Differenzdrucksensors 120 gemessen wird, kann der Luftdurchsatz V gemäß der nachfolgenden Formel berechnet werden.

$$V = \frac{MH^* R^* T}{P + DP}$$

Dabei entspricht die Größe MH der mittels eines Sensors gemessenen Luftmenge, bei der Größe R handelt es sich um eine Konstante. Ausgehend von diesem so berechneten Luftdurchsatz kann dann vorzugsweise mittels eines Kennfeldes der Beladungszustand BI berechnet werden.

Ausgehend von diesem Beladungszustand BI erfolgt im Normalbetrieb die Steuerung des Abgasnachbehandlungssystems. Bei einem Fehler des Abgasnachbehandlungssystems, insbesondere im Bereich der Ermittlung oder der Erfassung des Differenzdruckes DP, steuert die Fehlererkennung 415 das Schaltmittel 410 derart an, daß das Signal B der Simulation 400 zur Steuerung der Abgasnachbehandlung verwendet wird.

Im Notlauf wird die Größe (B) zur Steuerung des Abgasnachbehandlungssystems verwendet wird. Die Steuerung erfolgt abhängig von der Größe (B), die den Beladungszustand charakterisiert und/oder weiteren Signalen. Mittels der simulierten Größe kann ein sehr genauer Notlaufbetrieb realisiert werden. Besonders vorteilhaft ist, daß bei der Verwendung nur im Notlaufbetrieb eine einfache Simulation mit nur wenigen Signalen zum Einsatz gelangt.

Besonders vorteilhaft ist es, wenn die berechnete Größe (BI) und die simulierte Größe (B) des Beladungszustandes auf Plausibilität geprüft werden, und daß bei einer Unplausibilität ein Fehler des Abgasnachbehandlungssystems erkannt wird. Eine Unplausibilität wird beispielsweise erkannt, wenn die Differenz der beiden Größen größer als ein Schwellenwert ist. Dies bedeute, daß die Größe (B) des Beladungszustandes zur Erkennung des Fehlers verwendet wird. Durch diese Maßnahme ist eine einfache und genaue Fehlererkennung möglich.

## Patentansprüche

1. Verfahren zur Steuerung einer Brennkraftmaschine (100) mit einem Abgasnachbehandlungssystem (110), welches ein Partikelfilter (114) beinhaltet, wobei eine den Beladungszustand des Partikelfilters (114) charakterisierende Größe (B) ausgehend von wenigstens einer Betriebskenngröße (N, ME) der Brennkraftmaschine (100) simuliert wird, **dadurch gekennzeichnet, dass** eine Größe, welche die Sauerstoffkonzentration im Abgas charakterisiert, zur Simulation der den Beladungszustand des Partikelfilters (114) charakterisierenden Größe (B) verwendet wird.

2. Verfahren nach Anspruch 1, **dadurch gekennzeichnet, dass** weiterhin die Temperatur (T) im Abgasnachbehandlungssystem (110) zur Simulation der den Beladungszustand des Partikelfilters (114) charakterisierenden Größe (B) verwendet wird.

3. Verfahren nach Anspruch 1, **dadurch gekennzeichnet, dass** die den Beladungszustand des Partikelfilters (114) charakterisierende Größe (B) ausgehend von wenigstens der Drehzahl (N) und/oder einem die eingespritzte Kraftstoffmenge charakterisierenden Signal (ME) simuliert wird.

4. Verfahren nach Anspruch 1, **dadurch gekennzeichnet, dass** die Größe, welche die Sauerstoffkonzentration im Abgas charakterisiert, ausgehend von Betriebskenngrößen (N, ME) bestimmt wird.

5. Verfahren nach einem der vorherigen Ansprüche, **dadurch gekennzeichnet, dass** die den Beladungszustand des Partikelfilters (114) charakterisierende Größe (B) im Normalbetrieb zur Steuerung des Abgasnachbehandlungssystems (110) verwendet wird.

6. Verfahren nach einem der vorherigen Ansprüche, **dadurch gekennzeichnet, dass** die den Beladungszustand des Partikelfilters (114) charakterisierende Größe (B) zur Erkennung eines Fehlers verwendet wird.

**7.** Verfahren nach einem der vorherigen Ansprüche, **dadurch gekennzeichnet, dass** die den Beladungszustand des Partikelfilters (114) charakterisierende Größe (B) im Notlauf zur Steuerung des Abgasnachbehandlungssystems (110) verwendet wird.

**8.** Vorrichtung zur Steuerung einer Brennkraftmaschine (100) mit einem Abgasnachbehandlungssystem (110), welches ein Partikelfilter (114) beinhaltet, mit Mitteln (200, 205, 210, 220, 230, 400), die eine den Beladungszustand des Partikelfilters (114) charakterisierende Größe (B) ausgehend von wenigstens einer Betriebskenngröße (N, ME) der Brennkraftmaschine (100) simulieren, **dadurch gekennzeichnet, dass** die Mittel (200, 205, 210, 220, 230, 400) eine Größe, welche die Sauerstoffkonzentration im Abgas charakterisiert, zur Simulation der den Beladungszustand des Partikelfilters (114) charakterisierenden Größe (B) verwenden.

## Claims

**1.** Method for controlling an internal combustion engine (100) with an exhaust-gas aftertreatment system (110) which includes a particulate filter (114) in which a variable (B) which characterizes the loading state of the particulate filter (114) is simulated on the basis of at least one operating characteristic variable (N, ME) of the internal combustion engine (100), **characterized in that** a variable which characterizes the oxygen concentration in the exhaust gas is used to simulate the variable (B) which characterizes the loading state of the particulate filter (114).

**2.** Method according to Claim 1, **characterized in that**, futhermore, the temperature (T) in the exhaust-gas aftertreatment system (110) is used to simulate the variable (B) which characterizes the loading state of the particulate filter (114).

**3.** Method according to Claim 1, **characterized in that** the variable (B) which characterizes the loading state of the particulate filter (114) is simulated on the basis of at least the engine speed (N) and/or a signal (ME) which characterizes the injected fuel quantity.

**4.** Method according to Claim 1, **characterized in that** the variable which characterizes the oxygen concentration in the exhaust gas is determined on the basis of operating characteristic variables (N, ME).

**5.** Method according to one of the preceding claims, **characterized in that** the variable (B) which characterizes the loading state of the particulate filter (114) is used in normal operation to control the exhaust-gas aftertreatment system (110).

**6.** Method according to one of the preceding claims, **characterized in that** the variable (B) which characterizes the loading state of the particulate filter (114) is used to detect a fault.

**7.** Method according to one of the preceding claims, **characterized in that** the variable (B) which characterizes the loading state of the particulate filter (114) is used in emergency running mode to control the exhaust-gas aftertreatment system (110).

**8.** Device for controlling an internal combustion engine (100) having an exhaust-gas aftertreatment system (110) which includes a particulate filter (114), having means (200, 205, 210, 220, 230, 400) which simulate a variable (B) which characterizes the loading state of the particulate filter (114) on the basis of at least one operating characteristic variable (N, ME) of the internal combustion engine (100), **characterized in that** the means (200, 205, 210, 220, 230, 400) use a variable which characterizes the oxygen concentration in the exhaust gas to simulate the variable (B) which characterizes the loading state of the particulate filter (114).

## Revendications

**1.** Procédé pour commander un moteur à combustion interne comportant un système de retraitement des gaz d'échappement intégrant un filtre à particules, une grandeur (B) caractérisant l'état de charge du filtre à particules étant simulée à partir d'au moins une grandeur caractéristique de fonctionnement du moteur à combustion interne, **caractérisé en ce qu'** une grandeur qui caractérise la concentration d'oxygène dans les gaz d'échappement est utilisée pour la simulation de la grandeur (B) caractérisant l'état de charge du filtre à particules (114).

**2.** Procédé selon la revendication 1, **caractérisé en ce qu'** on utilise en outre la température (T) dans le système de retraitement des gaz d'échappement (110) pour simuler la grandeur (B) caractérisant l'état de charge du filtre à particules (114).

**3.** Procédé selon la revendication 1, **caractérisé en ce que** la grandeur (B) caractérisant l'état de charge du filtre à particules (114) est simulée à partir d'au moins la vitesse de rotation (N) et/ou d'un signal (ME) caractérisant la quantité de carburant injecté.

**4.** Procédé selon la revendication 1,
**caractérisé en ce que**
la grandeur qui caractérise la concentration d'oxygène dans les gaz d'échappement est déterminée à partir de grandeurs caractéristiques de fonctionnement (N, ME).

**5.** Procédé selon l'une quelconque des revendications précédentes,
**caractérisé en ce que**
la grandeur (B) caractérisant l'état de charge du filtre à particules (114) est utilisée en fonctionnement normal pour la commande du système de retraitement des gaz d'échappement.

**6.** Procédé selon l'une quelconque des revendications précédentes,
**caractérisé en ce que**
la grandeur (B) caractérisant l'état de charge du filtre à particules (114) est utilisée pour la détection d'une erreur.

**7.** Procédé selon l'une quelconque des revendications précédentes,
**caractérisé en ce que**
la grandeur (B) caractérisant l'état de charge du filtre à particules (114) est utilisée en fonctionnement de secours pour la commande du système de retraitement de gaz d'échappement (110).

**8.** Dispositif de commande d'un moteur à combustion interne (100) comportant un système de retraitement des gaz d'échappement (110) intégrant un filtre à particules (114), et équipé de moyens (200, 205, 210, 220, 230 ,400) qui simulent une grandeur (B) caractérisant l'état de charge du filtre à particules (114) à partir d'au moins une grandeur caractéristique de fonctionnement (N, ME) du moteur à combustion interne (100),
**caractérisé en ce que**
les moyens (200, 205, 210, 220, 230 ,400) utilisent une grandeur qui caractérise la concentration d'oxygène dans les gaz d'échappement pour la simulation de la grandeur (B) caractérisant l'état de charge du filtre à particules (114).

Fig.1

Fig.2

Fig.3

**Fig.4**